**Europäisches Patentamt**

**European Patent Office**

**Office européen des brevets**

(19)

(11) Veröffentlichungsnummer: **0 250 645**
**B1**

(12) # EUROPÄISCHE PATENTSCHRIFT

(45) Veröffentlichungstag der Patentschrift:
**12.12.90**

(51) Int. Cl.⁵: **B65G 65/22**, E21D 9/12

(21) Anmeldenummer: **86116926.6**

(22) Anmeldetag: **05.12.86**

(54) Einrichtung zum Gewinnen und/oder Fördern diverser Materialien.

(30) Priorität: **28.06.86  DE 3621768**

(43) Veröffentlichungstag der Anmeldung:
**07.01.88 Patentblatt 88/1**

(45) Bekanntmachung des Hinweises auf die Patenterteilung:
**12.12.90 Patentblatt 90/50**

(84) Benannte Vertragsstaaten:
**AT BE CH DE ES FR GB GR IT LI LU NL SE**

(56) Entgegenhaltungen:
**DE-A- 3 323 395**
**DE-B- 1 028 367**
**DE-C- 3 402 032**
**DE-C- 3 413 161**
**GB-A- 2 092 086**
**US-A- 3 140 768**

(73) Patentinhaber: **O & K ORENSTEIN & KOPPEL AG,**
**Brunsbütteler Damm 144-208, D-1000 Berlin 20(DE)**

(72) Erfinder: **Sagner, Rolf, Dipl.-Ing.,**
**Ernst-Albrecht-Strasse 34, D-4973 Vlotho(DE)**

## Beschreibung

Die Erfindung betrifft eine Einrichtung zum Gewinnen und/oder Fördern diverser Materialien für Tagebaubetriebe, bestehend aus einer als Gewinnungs- und/oder Förderorgan vorgesehenen, aus zwei aufeinander zu transportierenden Bereichen gebildeten Förderschnecke, die quer vor einem Fahrwerk angeordnet ist, wobei zwischen den Windungsenden der aufeinander zu transportierenden Bereiche der Förderschnecke Materialtransporteinrichtungen in Form von Schaufeln angeordnet sind, die das seitlich zugeführte Material einem Abzugsförderer übergeben.

Durch die DE-C 3 323 395 ist eine Vortriebsmaschine für Bergbaustrecken und Tunnelstrecken bekannt, bei der die Ladewerkzeuge als Ladeschnecken ausgebildet sind, die beiderseits einer Abfördereinrichtung armartig schwenkbar angeordnet sind. Das Material wird durch ein vorgeschaltetes Gewinnungsorgan gewonnen und fällt auf den Boden wo es von den Ladewerkzeugen erfaßt wird. Die Ladeschnecken sind zumindest bereichsweise mit Brechwerkzeugen bestückt, wobei im rückwärtigen Bereich der Ladeschnecken Schurren vorgesehen sind. Die Brechwerkzeuge in Verbindung mit den als Brechwiderlager ausgebildeten Schurren führen dazu, daß das hereingewonnene Material beim Laden gleichzeitig zerkleinert wird. Die mittig zwischen den Ladeschnecken angeordnete Abfördereinrichtung ist als Kettenkratzförderer ausgebildet und nimmt das am Boden zugeführte Material etwa in gleicher Höhe auf. Nachteilig ist hier, daß im Übergabebereich Material vorbeifallen und den kontinuierlichen Gewinnungs- und Ladeprozess beeinträchtigt. Darüberhinaus besteht die Gefahr, daß das zu ladende Material insbesondere im Übergabebereich nicht vollständig auf die Abfördereinrichtung übergeben wird, sondern in diesem Bereich durch die Schnecken mitgenommen und vor den Ladewerkzeugen abgeworfen wird.

Darüberhinaus ist der DE-C 3 402 032 eine konstruktiv ähnliche Maschine, wie vorab beschrieben, zu entnehmen, die ebenfalls Ladeschnecken aufweist, die schräg nach hinten verlaufend angeordnet sind und die das abzufördernde Material zur Mitte hin transportieren und es dort einem nachgeschalteten Förderer übergeben. Die vorab beschriebenen Nachteile kommen auch bei dieser Ausbildung zum Tragen.

Die GB-A 2 092 086 die dem Oberbegriff des Anspruchs 1 entspricht, offenbart einen Feldhäcksler, der zum Sammeln und Transportieren der am Boden liegenden Materialien, wie Blätter, Äste oder dgl. mit einer aus zwei Bereichen gebildeten Förderschnecke versehen ist. Die Schneckengänge der Bereiche sind so angeordnet, daß das Material zur Mitte der Förderschnecke bewegt wird, wobei zwischen den auslaufenden Schneckenwindungen beider Bereiche ein Freiraum gebildet ist. In diesem Freiraum sind im Querschnitt etwa rechtwinklig ausgebildete, an den Windungsenden sowie der Schneckenwelle angeschraubte Leitschaufeln vorgesehen, die das durch die beiden Schneckenbereiche zugeführte Material in das eigentliche Häckselgerät aufgeben. Ehe das Material jedoch in die Förderschnecke gelangt, wird es von einer darunter angeordneten Sammeleinrichtung aufgenommen und auf ein Leitblech aufgegeben, welches unterhalb der Förderschnecke vorgesehen ist. Die Nachteile dieses St.d.T. sind im wesentlichen darin begründet, daß diese Förderschnecke für den Einsatz im Tagebau nicht geeignet ist, da hier vielfach – u.a. auch in Abhängigkeit von den Witterungsverhältnissen – feuchtes und zum Kleben neigendes Material gefördert wird und dieses Material an den Leitschaufeln anbackt und den Förderquerschnitt somit verringert. Die Folge wäre ein häufiges Reinigen dieses Bereiches mit einer damit verbundenen schlechten Leistung. Dadurch, daß die Förderschnecke nicht unmittelbar am Boden arbeitet, dient sie auch nicht als Aufnahmeorgan. Durch Verwendung eines zusätzlichen Aufnahme- und Zuführorganes wird der Aufbau der Einrichtung verkompliziert.

Darüberhinaus ist der DE-B 1 028 367 ein Grabenräumgerät mit Kraftantrieb, Grabenschneckenförderung und Schleuderrad zu entnehmen. Es sind zwei parallel nebeneinander angeordnete, gegensinnig rotierende Förderschnecken vorgesehen, die das Material einem vor Kopf der Förderschnecken angeordneten Schleuderrad zuführen. Die Flügel des Schleuderrades sind hierbei entgegen der Drehrichtung des Flügelrades gekrümmt. Dadurch, daß die Förderschnecken und das Schleuderrad nicht auf einer gemeinsamen Welle angeordnet sind, ergibt sich zwangsläufig neben der komplizierten Bauweise auch eine aufwendige Arbeitstechnik. Darüberhinaus ist auch diese Einrichtung für den Tagebaueinsatz nicht geeignet, da sich die Schneckengänge der gegenläufig rotierenden Schnecken durch klebendes und feuchtes Material zusetzen und somit auch hier keine befriedigende Leistung erzielt werden kann. Steine und gröberes Gut können darüberhinaus auch nicht in das die Förderschnecke umgebende Förderrohr eingebracht werden, ohne daß es hier in kurzer Zeit zu Verstopfungen kommt.

Der Erfindung liegt die Aufgabe zugrunde, die im gattungsbildenden Teil angesprochene Einrichtung konstruktiv dahingehend zu verbessern, daß eine vollständige Entleerung der Förderschnecke erfolgt, ohne daß das Material in eine Kreisbewegung gerät. Dies insbesondere im Hinblick darauf, daß das Material einem dahinter gelegenen Abzugförderer übergeben werden soll, der nicht unmittelbar am Boden arbeitet, so daß das Material im Übergabebereich gestaut und auf eine erhöhte Position gebracht werden muß.

Diese Aufgabe wird erfindungsgemäß durch die Kombination folgender Merkmale gelöst:

– die Schneckengänge der Förderschnecke laufen im Materialübergabebereich in die Schaufeln aus,
– die Schaufeln weisen eine, in Materialtransportrichtung gesehen, gewölbte Außenkontur auf, die etwa einer logarithmischen Spirale entspricht,
– die Windungsenden der Schneckengänge sind im Materialübergabebereich parallel zueinander verlaufend ausgebildet.

Infolge der Drehbewegung tritt eine entsprechend hohe oder niedrige Beschleunigung ein, die abhängig von der Außenkontur der Schaufeln ist. Durch die Beschleunigung entlang der Schaufelaußenkontur und die Parallelbewegung des Materiales im Übergabebereich wird eine vollständige Materialübergabe auf den Abzugsförderer erreicht. Die Schaufelbreite ist abhängig vom Schneckendurchmesser und somit von der Förderleistung. Als Richtgröße gilt: B = 0,5 × D. Einem weiteren Gedanken der Erfindung gemäß arbeitet die Förderschnecke unterschlächtig, d.h. sie bewegt sich auf der Entleerungsseite von unten bzw. über die gesamte Länge nach oben, wobei oberhalb des Materialübergabebereiches ein, das Mitfliegen von Brocken (hervorgerufen durch die Meißel) begrenzender Abstreifer vorgesehen ist.

Der Übergabebereich selber kann durch eine die Förderschnecke und den Abzugsförderer räumlich voneinander trennende, sich über die Breite der Förderschnecke erstreckenden Platte gebildet sein, die im Übergabebereich einen Einzugskanal aufweist, der etwa auf der Höhe des mittleren Schneckendurchmessers beginnt. An dieser Platte kann das Führungselement entsprechend herausgeformt sein.

Die Erfindung ist in der Zeichnung dargestellt und wird wie folgt beschrieben. Es zeigen:

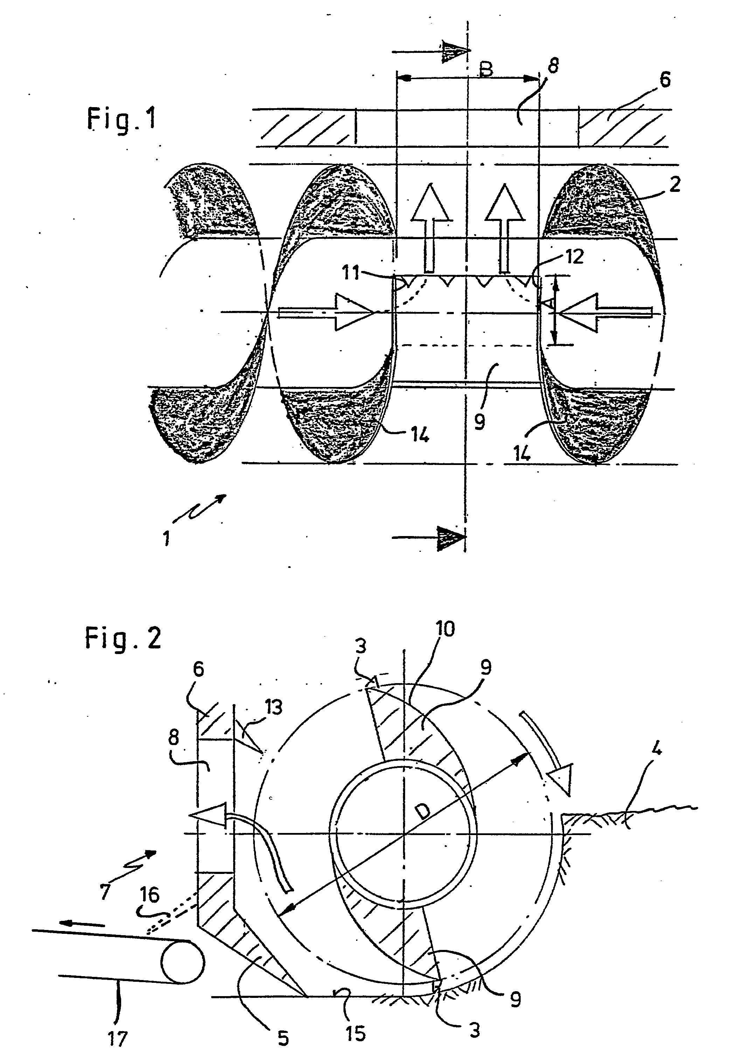

Fig. 1 und 2: verschiedene Ansichten der erfindungsgemäßen Einrichtung als Prinzipskizze.

Dargestellt ist lediglich der Bereich der quer vor einem Gerät angeordneten Förderschnecke 1, die gleichzeitig das Gewinnungsorgan bildet. Die Förderschnecke 1 ist ein- oder mehrgängig ausgebildet und transportiert das Material von beiden Seiten zur Mitte der Schnecke hin (Pfeilrichtung). Die Stege 2 der Förderschnecke 1 sind mit Brechwerkzeugen 3 bestückt, die das Material 4 lösen. Das gelöste Material 4 wird durch die unterschlächtig arbeitende Förder- und Gewinnungsschnecke 1 zwischen derselben und einem dahinter angeordneten Führungselement 5 zur Mitte gefördert. Das Führungselement 5 ist aus einer der Breite der Förderschnecke 1 entsprechenden Platte 6 herausgeformt, die im Materialübergabebereich 7 mit einem Einzugskanal 8 versehen ist. Die Schneckengänge 14 der Förderschnecke 1 laufen im Materialübergabebereich 7 in Schaufeln 9 aus, die eine gewölbte Außenkontur 10 aufweisen, welche etwa der geometrischen Form einer logarithmischen Spirale entspricht. Das gelöste Material wird, in Transportrichtung gesehen, entlang der Schaufelaußenkontur 10 beschleunigt. Die Windungsenden 11, 12 sind im Materialübergabebereich 7 (Bereich A) parallel zueinander verlaufend ausgebildet. Dadurch wird eine vollständige Materialübergabe zum Einzugskanal 8 erreicht.

Die Schaufelbereite B ist abhängig vom Schneckendurchmesser D und somit von der Förderleistung. Als Richtgröße gilt: B = 0,5 × D. Gegen fliegende Brocken ist oberhalb des Einzugskanales ein entlang der gesamten Schnecke verlaufender Abstreifer 13 vorgesehen.

Das gelöste und zur Mitte transportierte Material wird einem nachgeschalteten, nur angedeuteten Abzugsförderer 17 übergeben, wobei entsprechende Maßnahmen vorgesehen sind, die ein Vorbeifallen des Materiales auf den Erdboden 15 während der Übergabe verhindern. Dies kann z.B. durch eine Gleitschurre 16 oder dgl. realisiert werden.

## Patentansprüche

1. Einrichtung zum Gewinnen und/oder Fördern diverser Materialien für Tagebaubetriebe, bestehend aus einer als Gewinnungs- und/oder Förderorgan vorgesehenen, aus zwei aufeinander zu transportierenden Bereichen gebildeten Förderschnecke (1), die quer vor einem Fahrwerk angeordnet ist, wobei zwischen den Windungsenden (11, 12) der aufeinander zu transportierenden Bereiche der Förderschnecke (1) Materialtransporteinrichtungen in Form von Schaufeln (9) angeordnet sind, die das seitlich zugeführte Material einem Abzugsförderer (17) übergeben, gekennzeichnet durch die Kombination folgender Merkmale:
   - die Schneckengänge (14) der Förderschnecke (1) laufen im Materialübergabebereich (7) in die Schaufeln (9) aus,
   - die Schaufeln (9) weisen eine, in Materialtransportrichtung gesehen, gewölbte Außenkontur (10) auf, die etwa einer logarithmischen Spirale entspricht,
   - die Windungsenden (11, 12) der Schneckengänge (14) sind im Materialübergabebereich (7) parallel zueinander verlaufend ausgebildet.

2. Einrichtung nach Anspruch 1, dadurch gekennzeichnet, daß die Schaufelbreite (B) in Abhängigkeit von der Förderleistung und somit dem Schneckendurchmesser (D) der Formel B = 0,5 × D genügt.

3. Einrichtung nach den Ansprüchen 1 und 2, dadurch gekennzeichnet, daß die Förderschnecke (1) unterschlächtig, d.h. von unten nach oben arbeitet, wobei oberhalb des Materialübergabebereiches (7) ein Abstreifer (13) vorgesehen ist.

## Claims

1. Device for extracting and/or conveying various materials for open cast mining, consisting of a conveyor worm (1), formed by two regions transporting towards each other, and provided as an extracting and/or conveying device, which is arranged transversely in front of a travelling mechanism, material transporting devices in the form of scoops (9) being arranged between the ends of the turns (11, 12) of the regions of the conveyor worm (1) transporting towards each other, which scoops transfer to a discharge conveyor (17) the material fed in from the side, characterised by the combination of the following features:
   - the worm threads (14) of the conveyor worm (1) run out into the scoops (9) in the material transfer region (7),
   - the scoops (9), seen in the material transport direction, have a convex outer profile (10) which corresponds approximately to a logarithmic spiral,
   - the ends of the turns (11, 12) of the worm threads (14) run parallel to one another in the material transfer region (7).

2. Arrangement according to Claim 1, characterised in that the scoop width (B) as a function of the conveying capacity and thus of the worm diameter (D) complies with the formula B = 0.5 × D.

3. Arrangement according to Claims 1 and 2, characterised in that the conveyor worm (1) operates in an undershot manner, that is to say, from below in an upward direction, a scraper (13) being provided above the material transfer region (7).

## Revendications

1. Dispositif pour exploiter et/ou transporter divers matériaux pour exploitations à ciel ouvert, comprenant une vis sans fin (1) prévue en tant qu'organe d'exploitation et/ou de transport et constituée de deux sections transportant le matériau l'une vers l'autre, qui est disposée transversalement devant un mécanisme de déplacement, avec prévision, entre les extrémités des spires (11, 12) des sections de la vis sans fin (1) transportant le matériau l'une vers l'autre, de dispositifs de transport de matériau sous forme d'aubes (9) qui transfèrent le matériau amené latéralement à un convoyeur d'évacuation (17), caractérisé par la combinaison des caractéristiques suivantes:

— les filets (14) de la vis sans fin (1) se terminent par les aubes (9) dans la zone de transfert de matériau (7),

   — les aubes (9) présentent un contour extérieur (10) bombé, vu dans la direction de transport du matériau, qui correspond à peu près à une spirale logarithmique, et

   — les extrémités des spires (11, 12) des filets (14) de la vis sans fin sont disposées parallèles entre elles dans la zone de transfert de matériau (7).

2. Dispositif selon la revendication 1, caractérisé en ce que la largeur (B) des aubes en fonction de la capacité de transport et par suite du diamètre (D) de la vis sans fin, correspond à la formule B = 0,5 × D.

3. Dispositif selon les revendications 1 et 2, caractérisé en ce que la vis sans fin (1) travaille par en-dessous, c'est-à-dire de bas en haut, avec prévision d'un racleur (13) au-dessus de la zone de transfert de matériau (7).

EP 0 250 645 B1

Fig.1

B
8
6
2
11
12
14
9
14
1

Fig.2

10
3
6
9
13
8
D
4
7
16
9
17
5
15
3